Europäisches Patentamt

European Patent Office

Office européen des brevets

(19)

(11) Veröffentlichungsnummer : **0 080 635**
**B1**

(12)  **EUROPÄISCHE PATENTSCHRIFT**

(45) Veröffentlichungstag der Patentschrift :
12.11.86

(21) Anmeldenummer : 82110514.5

(22) Anmeldetag : 15.11.82

(51) Int. Cl.⁴ : **C 08 L 33/04, C 08 L 31/04, C 08 K 5/21**

(54) Selbstvernetzende wässrige Kunststoffdispersion.

(30) Priorität : 27.11.81 DE 3147007

(43) Veröffentlichungstag der Anmeldung :
08.06.83 Patentblatt 83/23

(45) Bekanntmachung des Hinweises auf die Patenterteilung : 12.11.86 Patentblatt 86/46

(84) Benannte Vertragsstaaten :
DE FR GB NL SE

(56) Entgegenhaltungen :
EP-A- 0 006 486
DE-A- 2 528 315
DE-A- 2 801 099
Textile Chemists and Colorist, Vol. 12 (1980), S. 311-316

(73) Patentinhaber : Röhm GmbH
Kirschenallee Postfach 4242
D-6100 Darmstadt 1 (DE)

(72) Erfinder : Fink, Herbert, Dr.
Berliner Strasse 24
D-6101 Bickenbach (DE)
Erfinder : Sütterlin, Norbert, Dr.
Am Horeth 23
D-6105 Ober-Ramstadt (DE)
Erfinder : Hübner, Klaus, Dr.
Leipziger Strasse 9
D-6105 Ober-Ramstadt (DE)
Erfinder : Siol, Werner, Dr.
Mühlbergstrasse 4
D-6102 Pfungstadt (DE)
Erfinder : Tilch, Willi
Wilhelmstrasse 63
D-6107 Reinheim (DE)

**Beschreibung**

Technisches Gebiet

Die Erfindung betrifft wäßrige Kunststoffdispersionen, die infolge eines Gehalts von N-Methylolamidgruppen in dem dispergierten Kunststoff selbstvernetzend sind. Aus diesen Gruppen kann Formaldehyd abgespalten werden, der als lästig oder gesundheitsgefährdend angesehen wird.

Stand der Technik

N-Methylolamidgruppen enthaltende wäßrige Kunststoffdispersionen auf Basis von Vinylpolymerisaten sind seit mehreren Jahrzehnten in zahllosen Ausführungsformen bekannt. Dazu gehören auch diejenigen nach der DE-C 1 102 410, die als zusätzliche Gruppen Hydroxyalkylester der Acryl- oder Methacrylsäure einpolymerisiert enthalten. Sie ergeben beim Kondensieren Filme von erhöhter Lösungsmittelbeständigkeit. Dieser Effekt ist jedoch so gering, daß auf den Hydroxyesterzusatz in der Praxis im allgemeinen verzichtet wird, es sei denn, daß er aus anderen Gründen Vorteile bringt.

Es ist allgemein bekannt, Bindemitteln, die Formaldehyd abspalten können, oder den damit gebundenen Substraten Formaldehydakzeptoren zuzusetzen, die den Formaldehyd chemisch binden; vgl. EP-A 6486, wo Harnstoff als Formaldehydakzeptor eingesetzt wird. Harnstoff ist jedoch nicht der wirksamte unter den bekannten Formaldehydakzeptoren; vgl. R.S. Perry et al., Textile Chemist und Colorist, Vol. 12 (1980), Seite 311-316. Heterocyclische Verbindungen, wie Benztriazol, gelten als wesentlich wirksamer.

Aufgabe

Es soll eine selbstvernetzende, wäßrige Kunststoffdispersion geschaffen werden, die N-Methylolamidgruppen enthält, aber als solche oder beim Eintrocknen zu einem Film oder beim Kondensieren des Films in verringertem Maße Formaldehyd freisetzt, ohne die anwendungstechnischen Eigenschaften des kondensierten Films zu beeinträchtigen.

Eine drastische Verminderung der Formaldehydfreisetzung läßt sich erwartungsgemäß durch einen Zusatz von Harnstoff erreichen. Die Beständigkeit des kondensierten Films gegen Trichloräthylen geht jedoch erheblich zurück. Dies ist an einem mit 50 Gew.-% Kunststoff imprägnierten Textilgewebe zu erkennen. Es wurde eine übliche Dispersion zur Textilimprägnierung aus 95 Gew.-% n-Butylacrylat und 5 Gew.-% N-Methylolmethacrylamid eingesetzt.

| | Formaldehydfreisetzung | | |
| | beim Trocknen in ppm | bis zur fertigen Kondensation in ppm | Binderverlust bei chem. Reinigung mit Trichloräthylen |
|---|---|---|---|
| harnstoff-freie Dispersion | 830 | 1910 | 6,5 % |
| gleiche Dispersion mit 2 % Harnstoff | < 50 | 170 | 14 % |

Lösung der Aufgabe und vorteilhafte Wirkung

Die Lösung der gestellten Aufgabe wurde in den Dispersionen gemäß Patentanspruch gefunden. Überraschenderweise wird die Lösungsmittelbeständigkeit durch den Harnstoffzusatz nicht verschlechtert, wenn die Dispersion Einheiten eines Hydroxyalkylesters enthält. Aus der in der DE-C 1 102 410 erteilten Lehre, wonach Hydroxyestergruppen die Lösungsmittelbeständigkeit verbessern, konnte die erfindungsgemäß erzielte Wirkung keinesfalls hergeleitet werden, denn sie müßte sich in entsprechendem Maße auch bei den harnstoff-freien Dispersionen zeigen. Dort ist aber eher die gegenteilige Wirkung zu beobachten, wie sich aus der folgenden Fortsetzung obiger Tabelle ergibt.

| | Formaldehydfreisetzung | | |
|---|---|---|---|
| | beim Trocknen in ppm | bis zur fertigen Kondensation in ppm | Binderverlust bei chem. Reinigung mit Trichloräthylen |
| harnstoff-freie Dispersion mit 5 Gew.-% Hydroxyäthyl-methacrylateinheiten | 630 | 1300 | 7,5 % |
| gleiche Dispersion mit 2 % Harnstoff | 50 | 120 | 7,3 % |

Die erfindungsgemäße Wirkung, daß die Formaldehydfreisetzung erheblich unterdrückt wird, während die anwendungstechnisch erforderliche Lösungsmittelbeständigkeit voll aufrechterhalten bleibt, war daher nicht zu erwarten und muß auf einer bisher nicht bekannten und nicht erklärbaren Wechselwirkung zwischen dem freiwerdenden Formaldehyd, dem Harnstoff und den Hydroxylgruppen zurückzuführen sein. Überraschenderweise lassen sich mit anderen bekannten Formaldehydakzeptoren, wie Melamin, keine vergleichbaren Wirkungen erzielnen. Das unterstreicht die Feststellung, daß hier eine spezifische Wechselwirkung zum Tragen kommt.

Gewerbliche Anwendbarkeit

Die erfindungsgemäßen Dispersionen eignen sich für alle bekannten Anwendungsgebiete selbstvernetzender Kunststoffdispersionen mit N-Methyloläthergruppen, wobei die verminderte Formaldehydfreisetzung nur dann zur Geltung kommt, wenn nicht andere starke Formaldehydquellen, wie z. B. größere Mengen von Aminoplastharzen oder Phenolharzen, gleichzeitig mitverwendet werden. Typische Anwendungsgebiete sind die Imprägnierung von Textilien, Papieren und Pappen, von Watte und Faservliesen, die Beschichtung von Substraten aller Art, wobei die Dispersion in der Regel als Bindemittel für Füll- und Farbstoffe eingesetzt wird, sowie die Herstellung von Preß- und Distungsmassen.

Zusammensetzung des Vinylpolymerisats

Unter den Monomeren (a) werden die Alkylester der Acryl- und Methacrylsäure, insbesondere diejenigen mit 1 bis 6 C-Atomen im Alkylrest, bevorzugt zum Aufbau des Vinylpolymerisats angewendet. Als Vinylester sind Vinylacetat und -propionat bevorzugt. Unter den Styrolen ist das unsubstituierte Styrol am wichtigsten ; es wird vorzugsweise neben Alkylacrylaten in geringerer Menge eingesetzt. Substituierte Styrole, wie Vinyltoluol oder α-Methylstyrol, sind unter den Monomeren (a) im allgemeinen nur in untergeordneten Mengen vertreten.

N-Methylol-acrylamid und/oder -methacrylamid sind vorzugsweise in Mengen von 1 bis 6 Gew.-%, gegebenenfalls zusammen mit etwa gleichen Mengen der entsprechenden freien Amide, am Aufbau des Vinylpolymerisats beteiligt.

Als Hydroxyalkylester (c) kommen neben den Estern und Halbestern der Malein-, Fumar- und Itakonsäure in erster Linie die Ester der Acryl- und Methacrylsäure in Betracht. Sie können sich z. B. vom Äthylenglykol, 1,2-Propylenglykol, 1,2-Butylenglykol, Butandiol-1,4, Diglykol, Triäthylenglykol oder anderen Polyglykolen ableiten. Mengen unter 2 % lassen die vorteilhafte Wirkung nicht im vollen Umfang erreichen. Mit etwa 4 bis 6 Gew.-% läßt sich in der Regel das Maximum der Wirkung erreichen. Mengen oberhalb 10 % sind zwar wirksam, machen das Polymerisat für manche Anwendungszwecke aber zu hydrophil.

Alle anderen, unter (a) bis (c) nicht erfaßten, aber damit copolymerisierbaren Vinylmonomeren können gewünschtenfalls in Mengen bis insgesamt 27,9 Gew.-% am Aufbau des Vinylpolymerisats beteiligt sein. Dazu gehören ungesättigte, polymerisierbare Carbonsäuren, wie Acryl- oder Methacrylsäure, deren Nitrile, ferner Vinylhalogenide, Vinylidenchlorid, Vinyläther und vernetzende Monomere mit 2 oder mehr polymerisierbaren Vinylgruppen, wie Divinylbenzol, Allylacrylat und -methacrylat, Glykoldiacrylat und -dimethacrylat, Methylen-bis-acrylamid und -methacrylamid und Triallyl-cyanurat.

Der Harnstoff-Zusatz

Es hat sich als vorteilhaft erwiesen, den Harnstoff erst nach Abschluß der Polymerisation zu der fertigen Dispersion zuzusetzen und in der wäßrigen Phase zu lösen. Die Menge wird um so größer gewählt, je mehr N-Methylolamidgruppen in dem Vinylpolymerisat enthalten sind. Mengen von 1 bis 3 Gew.-% ergeben eine ausreichende Verminderung der Formaldehydfreisetzung. Als Faustregel gilt, daß die Harnstoffmenge etwa die Hälfte des Methylolamid-Anteils ausmachen soll. Wird zuviel Harnstoff zugesetzt, so nimmt die Lösungsmittelbeständigkeit des kondensierten Polymerisats wieder ab. Die Menge des Harnstoffzusatzes ist auf das Gesamtgewicht der Dispersion bezogen.

## Beispiele 1 bis 4

In einem 1 l-Rührkolben wurden 160 Teile Wasser und 0,48 Teile einer 12,5 %igen wäßrigen Lösung eines sulfatierten und neutralisierten Umsetzungsproduktes von Tri-sec-butylphenol mit 7 Mol Äthylenoxid als Emulgator unter Rühren auf 80 °C erhitzt und mit 1 Teil einer 10 %igen Ammoniumperoxodisulfat-Lösung versetzt. Dann wurden bei dieser Temperatur als Emulsion

230 Teile Wasser
16 Teile der oben beschriebenen Emulgatorlösung
9 Teile einer 10 %igen Ammoniumperoxodisulfat-Lösung
400 Teile Monomerengemisch (gemäß nachf. Tabelle)

innerhalb von 4 Stunden zugetropft. Anschließend wurde die Temperatur 2 Stunden auf 80 °C gehalten und danach auf Raumtemperatur abgekühlt. Die fertige Dispersion wurde in zwei Teile geteilt, der eine davon mit Harnstoff versetzt und beide mit Phosphorsäure auf pH 2,2 eingestellt. Die Dispersionen waren koagulatfrei und stabil.

## Durchführung des Beispiels 5

In einem 1 l-Rührkolben wurden 160 Teile Wasser, 0,8 Teile Essigsäure, 2 Teile Borax und 3,2 Teile der in Beispiel 1 beschriebenen Emulgatorlösung unter Rühren auf 80 °C erhitzt und mit 10 Teilen einer 10 %igen Ammoniumperoxodisulfatlösung versetzt. Dann wurden bei dieser Temperatur als Emulsion :

227 Teile Wasser
16 Teile der oben angegebenen Emulgatorlösung
9 Teile einer 10 %igen Ammoniumperoxodisulfatlösung
400 Teile Monomerengemisch (gemäß nachf. Tabelle)

innerhalb von 4 Stunden zugetropft. Anschließend wurde die Temperatur 2 Stunden auf 80 °C gehalten und danach auf Raumtemperatur abgekühlt. Die fertigen Dispersionen wurden in zwei Teile geteilt und ein Teil mit Harnstoff versetzt. Beide Teile wurden mit Phosphorsäure auf pH 2,2 eingestellt.

## Analysenmethoden

Freier Formaldehyd in der Dispersion wird analysiert, indem die mit der 6- bis 8-fachen Menge Wasser verdünnte Dispersion mit einer Hydroxylammoniumchloridlösung vom pH 2,9 versetzt und nach 20 min die freigesetzte Salzsäure titriert wird. 1 Mol freigesetzte Salzsäure entspricht 1 Mol Formaldehyd. (Angabe in % bez. Gewicht der Dispersion).

Die Gesamt-Formaldehydabgabe wird durch Erhitzen einer Probe der Dispersion auf 140 °C ermittelt. Die innerhalb 15 min gasförmig freigesetzte Formaldehydmenge wird bestimmt. (Angabe in % bez. Gewicht d. Dispersion).

Der Binderverlust bei der Behandlung mit Trichloräthylen (BTV) wird an einem mit der Dispersion imprägnierten und bei 80 °C getrockneten Polyestergewebe mit einem Bindergehalt von 40 bis 50 % des Fasergewichts ermittelt. Dazu wird die Gewebeprobe 20 min bei 20 °C in einem Laborwaschgerät behandelt, mit Trichloräthylen gespült, bei 80 °C getrocknet und der Gewichtsverlust in Prozent, bezogen auf den Bindergehalt, bestimmt.

Die Quellung durch Methylisobutylketon (MIBK) wird an einem 0,5 mm dicken Film, der durch Eintrocknen einer Probe der zu untersuchenden Dispersion bei 80 °C und Kondensieren bei 140 °C hergestellt worden ist, ermittelt. Der Film wird bei 20 °C 30 min bzw. 4 Stunden in MIBK quellen gelassen, abgetupft und die prozentuale Gewichtszunahme bestimmt.

(Siehe Beispiele Seite 5 ff.)

**Beispiel 1**

| Polymerisatzusammensetzung | Harnstoff % | freier Formaldehyd % | Gesamt-Formaldehyd-Abgabe % | BTV % | MIBK-Aufnahme 0,5 h % |
|---|---|---|---|---|---|
| 200 T. Methylmethacrylat<br>144 T. Butylacrylat<br>16 T. N-Methylolmethacryl-amidlösung | 0 | 0,036 | 0,154 | 5 | 20 |
| 20 T. 2-Hydroxyäthylacrylat<br>12 T. Methacrylsäureamid<br>4 T. Methacrylsäure<br>4 T. Glykoldimethacrylat | 3 | 0,007 | 0,009 | 6 | 30 |
| Vergleichs-beispiel ohne Hydroxyester<br>200 T. Methylmethacrylat<br>164 T. Butylacrylat<br>16 T. N-Methylolmethacryl-amidlösung | 0 | 0,052 | 0,197 | 7 | 30 |
| 12 T. Methacrylsäureamid<br>4 T. Methacrylsäure<br>4 T. Glykoldimethacrylat | 3 | 0 | 0,007 | 10 | 60 |

0 080 635

## Beispiel 2

| Polymerisatzusammensetzung | Harnstoff % | freier Formaldehyd % | Gesamt-Formaldehyd-Abgabe % | BTV % | MIBK-Aufnahme 0,5 h % | 4·h |
|---|---|---|---|---|---|---|
| 200 T. Äthylacrylat<br>132 T. Methylmethacrylat<br>40 T. 2-Hydroxyäthylacrylat | 0 | 0,095 | 0,174 | 1 | 18 | 70 |
| 24 T. N-Methylolmethacrylamid-lösung<br>4 T. Itakonsäure | 2 | 0,026 | 0,014 | 4 | 30 | 85 |
| Vergleichs-beispiel. ohne Hydroxyester<br>200 T. Äthylacrylat<br>172 T. Methylmethacrylat | 0 | 0,088 | 0,209 | 4 | 10 | 80 |
| 24 T. N-Methylolmethacrylamid-lösung<br>4 T. Itakonsäure | 2 | 0,011 | 0,009 | 10 | 40 | 125 |

## Beispiel 3

| Polymerisatzusammensetzung | Harnstoff % | freier Formaldehyd % | Gesamt-Formaldehyd-Abgabe % | BTV % | MIBK[1] Aufnahme 0,5h % | 4 h % |
|---|---|---|---|---|---|---|
| 240 T. Butylacrylat<br>102 T. Styrol | 0 | 0,042 | 0,123 | 1 | 70 | 80 |
| 40 T. 4-Hydroxybutylacrylat<br>16 T. N-Methylolmethacrylamid-lösung<br>2 T. Allylmethacrylat | 5 | 0 | 0,005 | 2 | 105 | 110 |
| Vergleichs-beispiel ohne Hydroxyester<br>240 T. Butylacrylat<br>142 T. Styrol | 0 | 0,055 | 0,173 | 1 | 120 | 150 |
| 16 T. N-Methylolmethacrylamid-lösung<br>2 T. Allylmethacrylat | 5 | 0,008 | 0,005 | 4 | 180 | 210 |

0 080 635

Beispiel 4

| | Polymerisatzusammensetzung | Harnstoff % | freier Formaldehyd % | Gesamt-Formaldehyd-Abgabe % | BTV % | MIBK-Aufnahme 0,5 h % | 4 h % |
|---|---|---|---|---|---|---|---|
| | 390 T. Äthylacrylat<br>8 T. 4-Hydroxybutylacrylat | 0 | 0 | 0,034 | 10 | 380 | 480 |
| | 2 T. N-Methylolmethacryl-amidlösung | 0,2 | 0 | 0,011 | 15 | 410 | zerfallen |
| Vergl.-Beisp. ohne Hydroxyester | 398 T. Äthylacrylat | 0 | 0 | 0,059 | 20 | 390 | zerfallen |
| | 2 T. N-Methylolmethacryl-amidlösung | 0,2 | 0 | 0,010 | 50 | 600 | zerfallen |
| Beispiel 5 | 360 T. Vinylacetat<br>20 T. 2-Hydroxyäthylacrylat | 0 | 0,127 | n.b.* | 8 | 10 | 60 |
| | 20 T. N-Methylolacryl-amidlösung | 2 | 0,080 | n.b. | 9 | 17 | 90 |
| Vergl.-Beisp. ohne Hydroxyester | 380 T. Vinylacetat | 0 | 0,124 | n.b. | 9 | 20 | 90 |
| | 20 T. N-Methylolacryl-amidlösung | 2 | 0,066 | n.b. | 15 | 40 | 140 |

*da durch Acetaldehyd verfälscht.

**Patentanspruch**

Selbstvernetzende wäßrige Kunststoffdispersion, bestehend aus einer wäßrigen Phase und darin dispergierten Kunststoffpartikeln, die aus einem Vinylpolymerisat aus

a) 70-97,9 Gew.-% von einem oder mehreren ungesättigten polymerisierbaren Monomeren der Gruppe Acrylsäure- oder Methacrylsäurealkylester, Vinylester, Styrole,

b) 0,1-10 Gew.-% N-Methylol-acrylamid und/oder -methacrylamid,

c) 2-10 Gew.-% eines Hydroxyalkylesters einer α,β-ungesättigten Mono- oder Dicarbonsäure und gegebenenfalls

d) 0-27,9 Gew.-% eines oder mehrerer von den Monomeren a) bis c) verschiedener und mit diesen mischpolymerisierbarer Comonomerer bestehen,

dadurch gekennzeichnet, daß die wäßrige Phase 1 bis 5 Gew.-% Harnstoff enthält, bezogen auf das Gesamtgewicht der Dispersion.

**Claim** .

Self-crosslinking aqueous plastics dispersion consisting of an aqueous phase and plastics particles dispersed therein which consist of a vinyl polymer of

a) 70-97.9 % by weight of one or more unsaturated polymerisable monomers of the group comprising alkylacrylates and methacrylates, vinylesters and styrenes,

b) 0.1-10 % by weight of N-methylol-acrylamide and/or -methacrylamide,

c) 2-10 % by weight of a hydroxyalkylester of an α,β-unsaturated mono- or dicarboxylic acid and optionally

d) 0-27.9 % by weight of one or more comonomers which are different from monomers a) to c) and are copolymerisable therewith,

characterised in that the aqueous phase contains 1 to 5 % by weight of urea, based on the total weight of the dispersion.

**Revendication**

Dispersion aqueuse de matière plastique auto-réticulante, se composant d'une phase aqueuse et de particules de matière plastique qui y sont dispersées et qui sont faites d'un polymère vinylique formé à partir de

a) 70-97,9 % en poids d'un ou de plusieurs monomères insaturés polymérisables du groupe des esters alkyliques d'acide acrylique ou méthacrylique, des esters vinyliques et des styrènes,

b) 0,1-10 % en poids de N-méthylol-acrylamide et/ou -méthacrylamide,

c) 2-10 % en poids d'un ester hydroxyalkylique d'un acide mono- ou dicarboxylique α,β-insaturé et, le cas échéant,

d) 0-27,9 % en poids d'un ou de plusieurs comonomères différents des monomères a) à c) et copolymérisables avec ceux-ci,

caractérisée en ce que la phase aqueuse contient 1 à 5 % en poids d'urée sur la base du poids total de la dispersion.